(19) Europäisches Patentamt
European Patent Office
Office européen des brevets

(11) EP 0 997 626 B1

(12) **FASCICULE DE BREVET EUROPEEN**

(45) Date de publication et mention
de la délivrance du brevet:
**26.11.2003 Bulletin 2003/48**

(51) Int Cl.⁷: **F02D 41/02**, F01N 3/08

(21) Numéro de dépôt: **99402615.1**

(22) Date de dépôt: **22.10.1999**

(54) **Procédé de commande de la purge en oxydes d'azote d'un pot catalytique de traitement des gaz d'échappement d'un moteur à combustion interne**

Steuerverfahren zum Entfernen von Stickoxiden von einem Abgaskataslysator einer Brennkraftmaschine

Method to control the purging of nitrogen oxides from an exhaust gas catalytic converter of an internal combustion engine

(84) Etats contractants désignés:
**DE ES GB IT**

(30) Priorité: **28.10.1998 FR 9813522**

(43) Date de publication de la demande:
**03.05.2000 Bulletin 2000/18**

(73) Titulaire: **Renault s.a.s.**
**92100 Boulogne Billancourt (FR)**

(72) Inventeurs:
• **Beurthey, Stephan**
**91430 Vauhallan (FR)**
• **Von Wissel, Dirk**
**78000 Versailles (FR)**

(56) Documents cités:
**EP-A- 0 636 770**       **EP-A- 0 733 787**
**EP-A- 0 867 604**       **DE-C- 19 607 151**
**FR-A- 2 772 428**       **GB-A- 2 318 418**

**Description**

La présente invention est relative à un procédé de commande de la purge en oxydes d'azote d'un pot catalytique de traitement des gaz d'échappement d'un moteur à combustion interne, ledit pot adsorbant de tels oxydes lors du fonctionnement en mélange air/carburant pauvre dudit moteur et, plus particulièrement, à un tel procédé suivant lequel on commande une purge du pot par un accroissement temporaire de la richesse en carburant du mélange quand l'efficacité de stockage des oxydes d'azote dans le pot descend en dessous d'un seuil prédéterminé.

Pour réduire la pollution de l'atmosphère par les gaz d'échappement des moteur à combustion interne, en particulier ceux qui assurent la propulsion de véhicules automobiles, on équipe couramment les lignes d'échappement de ces gaz d'un pot catalytique (ou "catalyseur") ayant pour fonction de transformer les espèces chimiques nocives contenues dans ces gaz en espèces moins nocives, voire inoffensives.

C'est ainsi que l'on connaît un pot catalytique dit "à trois voies" ou "trifonctionnel", du fait qu'il assure une triple fonction d'oxydation des hydrocarbures imbrûlés (HC), d'oxydation du monoxyde de carbone (CO) en $CO_2$ et de réduction des oxydes d'azote (NOx) en azote gazeux.

Le souci de réduire les émissions de gaz à effet de serre, en particulier les émissions de gaz carbonique $CO_2$, a provoqué de l'intérêt pour un moteur à combustion interne capable de fonctionner avec un rapport air/carburant dit "pauvre", c'est-à-dire inférieur à celui d'un mélange stoechiométrique. Cependant, lorsqu'on utilise un pot catalytique trifonctionnel classique pour dépolluer les gaz d'échappement d'un tel moteur fonctionnant en mélange pauvre, on observe une très faible efficacité du pot dans la réduction des oxydes d'azote (NOx).

Pour pallier cet inconvénient, on propose dans le brevet européen n° 560 991 d'utiliser un pot catalytique trifonctionnel comprenant en outre des moyens d'adsorption des oxydes d'azote présents dans les gaz d'échappement, lorsque le mélange air/carburant provenant du moteur est pauvre.

Pour éviter que cette adsorption ne provoque à la longue la saturation de la capacité d'adsorption du catalyseur, le brevet précité propose de commuter périodiquement la richesse du mélange air/carburant à une valeur correspondant à un mélange stoechiométrique ou riche. Cette commutation provoque la désorption des NOx adsorbés dans le pot puis leur réduction par les HC et le CO présents dans le pot du fait de l'accroissement de la richesse du mélange. La durée de la commutation nécessaire pour désorber et réduire les NOx stockés dans le pot catalytique est proportionnelle à la masse des NOx stockés.

Lorsque cette durée est trop courte, des NOx restent stockés dans le catalyseur en diminuant ainsi sa capacité d'adsorption en NOx. Par contre, si elle est trop longue, tous les NOx stockés sont désorbés mais une partie des HC imbrûlés et du CO provenant de l'accroissement de la richesse du mélange est rejetée dans l'atmosphère.

Pour ajuster précisément la durée de régénération du pot, le brevet EP 636 770 propose d'utiliser une sonde de mesure de concentration en oxygène, ou de "richesse" en oxygène, des gaz sortant du pot catalytique. La régénération du pot est alors arrêtée lorsque la sonde délivre un signal représentatif d'une richesse "stoechiométrique" ou supérieure à cette dernière, un tel signal étant significatif de ce que les gaz sortant du pot contiennent une proportion importante d'hydrocarbures imbrûlés HC et de monoxyde de carbone CO. La présence de ces produits dans les gaz d'échappement est révélatrice de ce que le pot catalytique est complètement purgé des oxydes d'azote qu'il contenait.

Une telle gestion de la commande de la purge du catalyseur a cependant l'inconvénient d'arrêter la purge trop tard puisque les gaz contenus dans la ligne d'échappement en amont du pot catalytique contiennent des hydrocarbures imbrûlés et du monoxyde de carbone provenant de l'accroissement de la richesse du mélange, ces hydrocarbures et ce monoxyde n'étant alors pas traité lors de la traversée du pot. En outre, les hydrocarbures imbrûlés ainsi rejetés dans l'atmosphère correspondent à une surconsommation inutile de carburant.

On connaît aussi de EP-A-733 787 un dispositif de purification des gaz d'échappement d'un moteur à combustion interne comprenant des moyens pour estimer la quantité d'oxydes d'azote stockés dans un pot catalytique tel que décrit ci-dessus, des moyens pour calculer la quantité totale d'oxydes d'azote stockés sur la base du signal de sortie d'une sonde de richesse placée en aval du pot et des moyens de calcul d'une valeur de correction de la quantité estimée propre à faire correspondre cette dernière à la quantité calculée.

La présente invention a pour but de fournir un procédé de commande de la purge en oxydes d'azote d'un pot catalytique de traitement des gaz d'échappement d'un moteur à combustion interne, ledit pot adsorbant de tels oxydes lors du fonctionnement en mélange air/carburant pauvre dudit moteur, ce procédé étant basé sur une évaluation aussi précise que possible de la quantité d'oxydes d'azote adsorbés dans le pot, de manière à optimiser les purges du pot.

On atteint ce but de l'invention, ainsi que d'autres qui apparaîtront à la lecture de la description qui va suivre, avec un tel procédé faisant appel à une sonde disposée en aval du pot pour délivrer un signal représentatif de la concentration en oxygène des gaz sortant du pot, suivant lequel on commande une purge du pot par un accroissement temporaire de la richesse en carburant du mélange air/carburant d'alimentation du moteur quand l'efficacité de stockage des oxydes d'azote dans le pot descend en dessous d'un seuil prédéterminé, ce procédé étant remarquable en ce qu'on évalue ladite efficacité de stockage à l'aide d'au moins un modèle d'une grandeur liée à la quantité d'oxydes d'azote stockée dans le pot, ledit modèle comportant un facteur correcteur, et en ce qu'on fait varier ledit facteur correcteur en fonction d'une information contenue dans le signal délivré par la sonde, de manière à rapprocher la valeur de ladite grandeur fournie par ledit modèle de la valeur réelle de cette grandeur.

Suivant un premier mode de mise en oeuvre de la présente invention, ledit modèle de ladite grandeur est de la forme :

$$\Delta NS_{stoc} = Q_{nox}.Effstoc.\Delta t.\alpha$$

où :

- $\Delta NS_{stoc}$ est la masse d'oxydes d'azote (NOx) stockés dans le pot, pendant un intervalle de temps $\Delta t$, en mélange pauvre,
- $Q_{nox}$, le débit du moteur en oxydes d'azote (NOx),
- $\alpha$ le facteur correcteur, que l'on fait croître ou décroître suivant que le signal de sortie de la sonde bascule ou ne bascule pas, respectivement, à une valeur correspondant à un mélange riche, lors d'une purge du pot de durée T prédéterminée.

Suivant un deuxième mode de mise en oeuvre de la présente invention, ledit modèle de ladite grandeur est de la forme :

$$\tau'= \frac{NS}{NSC} \cdot \beta$$

où :

- $\tau'$ est le taux de remplissage du pot en oxydes d'azote (NOx),
- NS et NSC sont, respectivement, la masse d'oxydes d'azote stockés dans le pot et la masse d'oxydes stockables dans ce pot,
- $\beta$, le facteur correcteur, que l'on fait croître ou décroître suivant que le signal de sortie de la sonde bascule, ou ne bascule pas, respectivement, à une valeur correspondant à un mélange riche, lors d'une purge du pot de durée T prédéterminée.

Comme on le verra plus loin, quel que soit le mode de mise en oeuvre choisi, la présente invention assure un bon traitement des oxydes d'azote dégagés par le moteur en adaptant étroitement la fréquence des purges du pot en oxydes d'azote aux besoins de celui-ci.

D'autres caractéristiques et avantages du procédé suivant l'invention apparaîtront à la lecture de la description qui va suivre et à l'examen du dessin annexé dans lequel :

- la figure 1 est un schéma d'une installation de dépollution des gaz d'échappement d'un moteur thermique propre à la mise en oeuvre du procédé suivant l'invention, et
- les figures 2 et 3 sont des graphes représentant deux formes du signal de sortie d'une sonde de richesse incorporée à l'installation de la figure 1, ces graphes étant utiles à l'explication du procédé de commande suivant l'invention.

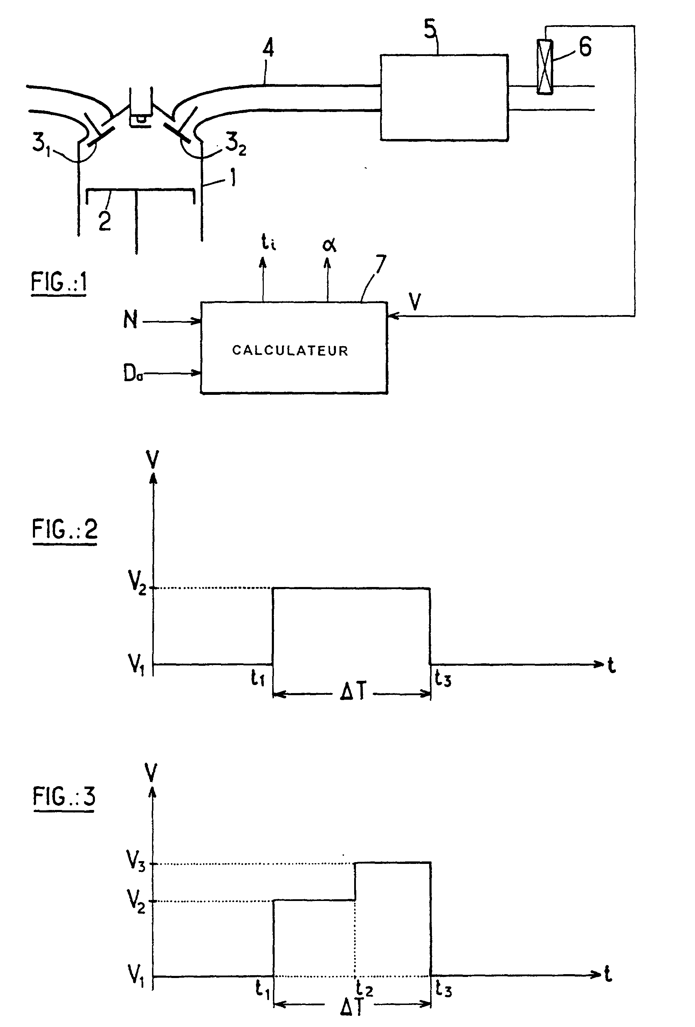

A la figure 1 du dessin annexé, on a représenté schématiquement un des cylindres d'un moteur à combustion interne 1 comprenant classiquement un piston 2 et des soupapes $3_1, 3_2$ d'admission et d'échappement respectivement, la soupape d'échappement communiquant avec une ligne d'échappement 4 dans laquelle est placée un pot catalytique 5 trifonctionnel, du type évoqué en préambule de la présente description et comprenant donc des moyens lui permettant d'adsorber des oxydes d'azote présents dans les gaz d'échappement du moteur quand celui-ci fonctionne en mélange air/carburant pauvre.

Une sonde 6 de mesure de la concentration en oxygène des gaz d'échappement est placée en aval du pot 5, sur la ligne d'échappement. Le signal délivré par cette sonde est classiquement utilisé par un calculateur numérique 7 de gestion du moteur 1, qui reçoit des signaux d'autres capteurs (non représentés) de signaux de mesure de paramètres tels que le régime N et le débit d'air Da admis dans le moteur, pour commander le temps d'ouverture ti d'injecteurs de carburant (non représentés) dans le moteur, l'angle $\alpha$ d'avance à l'allumage du mélange air/carburant, etc..., tout en assurant une régulation de la commande du moteur, notamment à l'aide du signal délivré par la sonde 6, dite sonde lambda. Toutes ces dispositions sont bien connues de l'homme de l'art et n'exigent donc pas une description plus détaillée.

Comme on l'a vu plus haut, le pot catalytique se chargeant en NOx pendant les phases de fonctionnement en mélange pauvre du moteur 1, il convient de surveiller le chargement du pot de manière à purger celui-ci quand il cesse d'assurer efficacement sa fonction d'adsorption des NOx en mélange pauvre. Pour quantifier cette efficacité, on définit l'efficacité instantanée de stockage, Effstoc, des NOx dans le pot par l'expression :

$$Effstoc = 1 - \frac{\text{débit de NOx à la sortie de la ligne d'échappement}}{\text{débit de NOx à la sortie du moteur 1}}$$

Suivant un premier mode de mise en oeuvre de la présente invention, on évalue l'efficacité de stockage à l'aide d'un modèle d'une grandeur $\Delta NS_{stoc}$ liée à la quantité de NOx stockés dans le pot, cette grandeur $\Delta NS_{stoc}$ représentant la quantité de NOx stockée dans le pot, en mélange pauvre, sur un intervalle de temps $\Delta t$ correspondant par exemple à la période d'échantillonnage de signaux exploités par le calculateur 7. Le modèle de cette grandeur prend alors la forme :

$$\Delta NS_{stoc} = Q_{nox}.Effstoc.\Delta t.\alpha$$

où :

- $Q_{nox}$ est le débit de NOx émis par le moteur,
- $\alpha$, un facteur correcteur variable.

Bien entendu, le calcul de $\Delta NS_{stoc}$, ainsi que celui des autres grandeurs présentées dans la suite de la présente description, est assurée par le calculateur 7, dûment programmé à cet effet.

L'efficacité Effstoc est mémorisée dans le calculateur 7 sous la forme d'une table à deux entrées constituée par le taux de remplissage $\tau$ du pot 5 en NOx et la température ($\theta$) de ce pot. Effstoc est une fonction décroissante de $\tau$ et de $\theta$. Le taux de remplissage est défini par la relation :

$$\tau = NS/NSC$$

où NS et NSC sont, respectivement, la masse de NOx stockée et la masse de NOx stockable dans le pot 5.

NSC est mémorisé dans le calculateur 7 sous la forme d'une table dont l'entrée est là température $\theta$ du pot. Cette température $\theta$ peut être soit mesurée à l'aide d'un capteur (non représenté à la figure 1), soit estimée à l'aide d'un modèle, comme cela est connu.

$Q_{nox}$ est aussi mémorisé sous la forme d'une table dont les entrées sont le régime N du moteur 1 et le débit d'air $D_a$ entrant dans ce dernier.

Au pas de calcul d'ordre i courant, à la récurrence $\Delta t$, là masse $NS_i$ dé NOx stockés en mélange pauvre dans le pot 5 est donnée par l'expression :

$$NS_i = NS_{i-1} + \Delta NS_{stoc}$$

Suivant l'invention, lorsque l'efficacité Effstoc passe en dessous d'un seuil Effmin, le calculateur 7 déclenche une purge du pot catalytique par passage de la richesse du mélange air/carburant d'alimentation du moteur à une valeur stoechiométrique ou surstoechiométrique. La masse $\Delta NS_{destoc}$ de NOx désorbée, ou destockée, par le pot 5 pendant un intervalle de temps $\Delta t$ est alors donnée par l'expression :

$$\Delta NS_{destoc} = a . (Rp-I) . Q_{ess} . \Delta t$$

où :

- a, coefficient de rendement de purge, est un coefficient de mise à l'échelle correspondant à la masse de NOx destockée pour un gramme d'essence,
- $R_p$ est la richesse utilisée lors de la purge, et
- $Q_{ess}$ est le débit d'essence injecté dans le moteur.

A chaque pas de calcul i à la récurrence $\Delta t$ pendant une purge, la masse $NS_i$ de NOx restant encore stockée dans le pot catalytique est alors donnée par :

$$NS_i = NS_{i-1} - \Delta NS_{destoc}$$

Lorsque cette masse $NS_i$ atteint la valeur 0, le calculateur commande l'arrêt de la purge en réglant le temps d'ouverture $t_i$ des injecteurs de carburant dans le moteur à une valeur correspondant à un mélange air/carburant pauvre. La durée d'une telle purge est alors couramment de l'ordre d'une seconde.

On observe que le modèle de $\Delta NS_{stoc}$ explicité ci-dessus ne peut conduire à des calculs de précision satisfaisante que si Effstoc et Qnox sont correctement estimés. Suivant l'invention, le facteur $\alpha$ est un facteur correcteur introduit pour rapprocher l'estimation calculée de la masse $\Delta NS_{stoc}$ de la valeur réelle de cette masse.

Suivant une caractéristique de la présente invention, on atteint ce but en faisant varier le facteur a selon la stratégie explicitée ci-dessous, en liaison avec l'examen des graphes des figures 1 et 2 représentant des évolutions de la tension V constituant le signal de sortie de la sonde à oxygène 6, pendant une purge du pot de durée T.

On se réfère d'abord au graphe de la figure 2 où, à l'instant $t_1$, le calculateur 7 déclenche une purge du pot en NOx, en commutant la richesse du mélange air/carburant d'alimentation du moteur 1 d'une valeur correspondant à un mélange pauvre à une valeur correspondant à une combustion de ce mélange autour de la stoechiométrie. Le signal de tension V délivré par la sonde passe alors d'une valeur $V_1$ à une valeur $V_2$.

Le calculateur 7 maintient la richesse du mélange air/carburant entrant dans le moteur à cette valeur pendant l'intervalle de temps de durée T précitée, considérée comme suffisante pour assurer une purge complète du pot. En pratique, la durée de cet intervalle de temps est de l'ordre d'une seconde.

Si, à l'issue de cet intervalle de temps, le signal V retombe à la valeur $V_1$ correspondant à un mélange pauvre, sans être passé intermédiairement par une valeur supérieure à $V_2$, on peut en conclure que l'intervalle de temps T choisi était trop court pour assurer une purge complète du pot.

En effet, dans le cas contraire (voir figure 3), si un intervalle de temps $(t_2-t_1) < \Delta T$ est suffisant pour assurer la purge complète du pot, on observe à un instant $t_2$ une montée du signal V à une valeur $V_3 > V_2$ représentative d'un mélange air/carburant "riche", du fait qu'à l'instant $t_2$, la purge du pot cesse de consommer des hydrocarbures imbrûlés (HC) et du monoxyde de carbone (CO) sortant du moteur.

Bien entendu, à la fin $(t_3)$ de l'intervalle de temps T, le signal V retombe à la valeur correspondant à un mélange pauvre, du fait de la commande en ce sens du temps d'ouverture $t_i$ des injecteurs, par le calculateur 7.

Ainsi donc, si le signal de sortie de la sonde 6 ne passe pas à une valeur telle que $V_3$ correspondant à un mélange riche pendant la durée T d'une purge, cela signifie que le pot 5 contient encore, après cette purge, des oxydes d'azote NOx non destockés pendant la purge, alors même que l'estimation de la masse de NOx stockée faite à l'aide du modèle conclurait à la purge complète du pot.

Suivant l'invention, dans un tel cas, on accroît artificiellement la masse de NOx stockée résultant du modèle en accroissant le facteur correcteur $\alpha$ intervenant dans le modèle, de la valeur actuelle $\alpha$ à une valeur $\alpha + x_1$, $x_1$ étant un incrément calibrable. Le calculateur 7 prend en compte la nouvelle valeur du facteur correcteur $\alpha$ lors du pas de purge suivant de durée T, ce facteur pouvant ainsi être adapté lors de chacun des pas de purge successifs nécessaires.

En sens inverse, si le signal de sortie de la sonde 6 passe à une valeur telle que $V_3 > V_2$ pendant la durée T d'une purge, cela signifie que, dès l'instant $t_2$, la purge du pot en NOx était complète et qu'on aurait donc pu arrêté la purge à cet instant.

Suivant l'invention, dans ce cas, on diminue artificiellement la masse de NOx stockée résultant du modèle, en diminuant le facteur correcteur $\alpha$, de sa valeur actuelle $\alpha$ à une valeur $\alpha - x_2$, $x_2$ étant un incrément calibrable, la valeur réduite étant alors prise en compte lors de la prochaine purge.

La stratégie de correction du facteur $\alpha$ du modèle décrit ci-dessus permet d'améliorer la précision de l'estimation de la masse de NOx stockée dans le pot par le modèle, et donne des garanties pour une intervention efficace des purges du pot, commandées par le calculateur 7. Quand le facteur $\alpha$ croît, le modèle indique une saturation plus rapide du pot en NOx, ce qui fait chuter plus rapidement l'efficacité Effstoc, fonction décroissant de $NS_i$. La fréquence des purges commandées par le calculateur croît donc pour faire remonter cette efficacité au-dessus de la valeur Effmin. Quand $\alpha$ décroît, $NS_i$ croît moins vite et la fréquence des purges diminue, car Effstoc chute moins vite.

Suivant un deuxième mode de mise en oeuvre du procédé selon l'invention, on part d'une expression de $\Delta NS_{stoc}$ de la forme :

$$\Delta NS_{stoc} = Q_{nox}.Effstoc.\Delta t$$

dans laquelle Effstoc est toujours tiré d'une table dont les entrées sont le taux de remplissage $\tau$ et la température $\theta$ du pot.

Suivant une caractéristique importante de ce deuxième mode de mise en oeuvre de l'invention, la correction suivant l'invention s'applique maintenant au taux de remplissage alors modélisé comme suit :

$$\tau' = (NS/NSC).\beta$$

$\beta$ étant un facteur correcteur que le calculateur fait varier suivant la stratégie décrite dans la suite.

On calcule ensuite la masse $NS_i$ de NOx stockée dans le pot en mélange pauvre au pas de calcul i, la masse de $\Delta NS_{destoc}$ de NOx désorbée par le pot pendant un intervalle de temps de purge T et la masse d'oxydes restant alors encore dans le pot, comme décrit ci-dessus pour le premier mode de mise en oeuvre du procédé suivant l'invention.

Comme la variation du coefficient $\alpha$ de ce premier mode de mise en oeuvre, la variation suivant l'invention du coefficient $\beta$ a pour but de rapprocher les estimations faites à l'aide du modèle des valeurs réelles des grandeurs estimées. Pour ce faire, le calculateur fait varier $\beta$ par des incréments calibrables additifs $y_1$ ou soustractifs $y_2$, en fonction des basculements du signal V de sortie de la sonde 6 observés pendant une purge de durée T comme, et notamment dans le même sens que, le coefficient $\alpha$ du premier mode de mise en oeuvre de la présente invention.

Cette stratégie de correction du facteur $\beta$ du modèle ($\tau'$) du taux de remplissage en NOx du pot 5, permet d'améliorer la précision de l'estimation de ce taux. Quand $\beta$ croît, le modèle indique une croissance plus rapide du taux de remplissage, ce qui fait chuter plus vite l'estimation de l'efficacité Effstoc, fonction décroissante de ce taux. Le calculateur 7 fait croître alors la fréquence des purges du pot. Quand le calculateur fait décroître $\beta$, le taux de remplissage s'accroît moins vite et la fréquence des purges commandée par le calculateur décroît.

Bien entendu, l'invention n'est pas limitée aux deux modes de mise en oeuvre décrits ci-dessus. C'est ainsi que l'on pourrait combiner ces deux modes de mise en oeuvre, en agissant d'abord sur le coefficient $\alpha$ du modèle de la masse $\Delta NS_{stoc}$ de NOx stockée, puis sur le coefficient $\beta$ du modèle du taux de remplissage du pot.

De même, on pourrait remplacer la sonde à oxygène 6 par un capteur délivrant un signal fonction de la concentration en hydrocarbures imbrûlés HC et en monoxyde de carbone CO des gaz d'échappement sortant du pot 5.

**Revendications**

**1.** Procédé de commande de la purge en oxydes d'azote d'un pot catalytique (5) de traitement des gaz d'échappement d'un moteur (1) à combustion interne, ce pot comprenant des moyens d'adsorption de tels oxydes lors d'un fonctionnement dudit moteur en mélange air/carburant pauvre, une sonde (6) étant disposée en aval dudit pot pour délivrer un signal représentatif de la concentration en oxygène des gaz sortant du pot (5), procédé suivant lequel on commande une purge du pot par un accroissement temporaire de la richesse en carburant dudit mélange quand l'efficacité de stockage (Effstoc) des oxydes d'azote (NOx) dans le pot (5) descend en dessous d'un seuil prédéterminé, **caractérisé en ce qu'**on évalue ladite efficacité de stockage (Effstoc) à l'aide d'au moins un modèle d'une grandeur ($\Delta NS_{stoc}$ ; $\tau'$) liée à la quantité d'oxydes d'azote (NOx) stockée dans le pot, ledit modèle comportant un facteur correcteur ($\alpha$ ; $\beta$), et **en ce qu'**on fait varier ledit facteur correcteur ($\alpha$ ; $\beta$) en fonction d'une information contenue dans le signal délivré par la sonde (6), de manière à rapprocher la valeur de ladite grandeur, fournie par ledit modèle, de la valeur réelle de cette grandeur.

**2.** Procédé conforme à la revendication 1, **caractérisé en ce que** ledit modèle de ladite grandeur et de la forme :

$$\Delta NS_{stoc} = Q_{nox}.Effstoc.\Delta t.\alpha$$

où :

- $\Delta NS_{stoc}$ est la masse d'oxydes d'azote (NOx) stockée dans le pot, pendant un intervalle de temps $\Delta t$, en mélange pauvre,
- $Q_{nox}$, le débit du moteur en oxydes d'azote (NOx),
- $\alpha$, ledit facteur correcteur, que l'on fait croître ou décroître suivant que le signal de sortie de la sonde bascule, ou ne bascule pas, respectivement, à une valeur correspondant à un mélange riche, lors d'une purge du pot de durée (T) prédéterminée.

**3.** Procédé conforme à la revendication 2, **caractérisé en ce qu'**on tire la valeur de l'efficacité de stockage (Effstoc) d'une table dont les entrées sont la température ($\theta$) et le taux de remplissage (NS/NSC) du pot en oxydes d'azote (NOx), (NS) étant la masse d'oxydes d'azote stockée dans le pot, (NSC) la masse d'oxydes d'azote stockable, fonction de la température (θ) du pot.

**4.** Procédé conforme à la revendication 1, **caractérisé en ce que** ledit modèle de ladite grandeur est de la forme :

$$\tau' = \frac{NS}{NSC} \cdot \beta$$

où :

- $\tau'$ est le taux de remplissage du pot en oxydes d'azote (NOx),
- NS et NSC sont, respectivement, la masse d'oxydes d'azote stockée dans le pot et la masse d'oxydes stockable dans ce pot,
- $\beta$, ledit facteur correcteur, que l'on fait croître ou décroître suivant que le signal de sortie de la sonde (6) bascule, ou ne bascule pas, respectivement, à une valeur correspondant à un mélange riche, lors d'une purge du pot de durée (T) prédéterminée.

**5.** Procédé conforme à la revendication 2 ou 4, **caractérisé en ce qu'**on tire la valeur de l'efficacité de stockage (Effstoc) d'une table dont les entrées sont la température et un taux de remplissage corrigé ($\frac{NS}{NSC} \cdot \beta$) du pot.

**6.** Procédé conforme à la revendication 5, prise en combinaison avec la revendication 2, **caractérisé en ce que** ledit taux de remplissage corrigé du pot est de la forme ($\frac{NS}{NSC} \cdot \beta$) où :

- NS et NSC sont, respectivement, la masse d'oxydes d'azote stockée dans le pot et la masse d'oxydes stockable dans ce pot,
- $\beta$, un facteur correcteur que l'on fait croître ou décroître suivant que le signal de sortie de la sonde bascule, ou ne bascule pas, respectivement, à une valeur correspondant à un mélange riche, lors d'une purge du pot de durée ($\Delta T$) prédéterminée.

**7.** Procédé conforme à l'une quelconque des revendications précédentes, **caractérisé en ce que**, lors d'une purge du pot, on calcule en continu une estimation de la masse d'oxydes d'azote restant stockée dans le pot et **en ce qu'**on arrête la purge quand ladite masse devient nulle.

**Claims**

**1.** Method for controlling the purging of nitrogen oxides from a catalytic converter (5) for processing exhaust gases of an internal combustion engine (1), said converter comprising means for adsorption of such oxides when said engine is operating with a lean air/fuel mixture, a probe (6) being disposed downstream of said converter in order to deliver a signal representing the oxygen concentration of the gases leaving the converter (5), according to which method purging of the converter is controlled by a temporary increase in the richness in fuel in said mixture when the storage efficacy (Effstoc) of the nitrogen oxides (NOx) in the converter (5) goes below a pre-determined threshold, **characterised in that** said storage efficacy (Effstoc) is evaluated with the aid of at least one model of a value ($\Delta NS_{stoc}$ ; $\tau'$) linked to the quantity of nitrogen oxides (NOx) stored in the converter, said model comprising a correction factor ($\alpha$ ; $\beta$) and **in that** said correction factor ($\alpha$ ; $\beta$) is varied according to data contained in the signal delivered by the probe (6), such as to bring the value of said quantity supplied by said model closer to the actual value of said quantity.

**2.** Method according to claim 1, **characterised in that** said model of said quantity and having the form:

$$\Delta NS_{stoc} = Q_{nox} \cdot Efstoc \cdot \Delta t \cdot \alpha$$

wherein:

- $\Delta NS_{stoc}$ is the mass of nitrogen oxides (NOx) stored in the converter, during a period of time $\Delta t$, with a lean mixture,
- $Q_{nox}$ is the yield of nitrogen oxides (NOx) of the engine,

- α is said correction factor, which is increased or decreased according to whether the output signal of the probe moves or does not move respectively to a value corresponding to a rich mixture at the time of purging, of a pre-determined duration (T), of the converter.

3. Method according to claim 2, **characterised in that** the value of the storage efficiency (Effstoc) is drawn from a table, the inputs of which are the temperature (θ) and the rate of filling (NS/NSC) of the converter with nitrogen oxides (NOx), (NS) being the mass of nitrogen oxides stored in the converter, (NSC) being the mass of nitrogen oxides that can be stored, which is a function of the temperature (θ) of the converter.

4. Method according to claim 1, **characterised in that** said model of said quantity has the form:

$$\tau' = \frac{NS}{NSC} \cdot \beta$$

wherein:

- $\tau'$ is the rate of filling of the converter with nitrogen oxides (NOx),
- NS and NSC are respectively the mass of nitrogen oxides stored in the converter and the mass of oxides that can be stored in said converter,
- β is said correction factor that is increased or decreased according to whether the output signal of the probe (6) moves or does not move respectively to a value corresponding to a rich mixture, at the time of purging of the converter of a pre-determined duration (T).

5. Method according to claim 2 or 4, **characterised in that** the value of the storage efficiency (Effstoc) is drawn from a table, the inputs of which are the temperature and a corrected rate of filling

$$(\frac{NS}{NSC} \cdot \beta)\ NSC$$

of the converter.

6. Method according to claim 5, taken in combination with claim 2, **characterised in that** said corrected rate of filling of said converter has the form:

$$(\frac{NS}{NSC}) \cdot \beta$$

wherein:

- NS and NSC are respectively the mass of nitrogen oxides stored in the converter and the mass of nitrogen oxides that can be stored in said converter,
- β is a correction factor that is increased or decreased according to whether the output signal of the probe moves or does not move respectively to a value corresponding to a rich mixture, at the time of purging of the converter of pre-determined duration (ΔT).

7. Method according to any one of the preceding claims, **characterised in that** at the time of purging of the converter, an estimate of the mass of nitrogen oxides remaining stored in the converter is calculated continuously, and **in that** purging is stopped when said mass becomes zero.

**Patentansprüche**

1. Verfahren zur Reinigung eines mit einem Katalysator versehenen Auspufftopfes (5) zur Behandlung von Abgasen eines Verbrennungsmotors (1) von Stickoxiden, wobei der Auspufftopf eine Anordnung zur Adsorption derartiger Oxide während des Betriebes des Motors mit einem mageren Luft/Kraftstoff-Gemisch aufweist und eine Sonde (6), die stromabwärts des Auspufftopfes angeordnet ist und ein Signal abgibt, das der Konzentration an Sauerstoff in den aus dem Auspufftopf (5) austretenden Gasen entspricht, wobei eine Reinigung des Auspufftopfes durch eine zeitweise Vergrößerung der Anreicherung mit Kraftstoff im Gemisch durchgeführt wird, wenn der Wirkungsgrad der Ablagerung (Effstoc) der Stickoxide (NOx) im Auspufftopf (5) unterhalb einen vorgegebenen Schwellwert sinkt, **dadurch gekennzeichnet, dass** der Wirkungsgrad der Ablagerung (Effstoc) mittels wenigstens eines Modells für eine Größe ($\Delta NS_{stoc}$; $\tau'$) für die im Auspufftopf abgelagerte Menge an Stickoxiden (NOx) abgeschätzt wird, wobei das Modell einen Korrekturfaktor ($\alpha$; $\beta$) aufweist, und dass dieser Korrekturfaktor ($\alpha$; $\beta$) derart als Funktion einer in dem von der Sonde (6) abgegebenen Signal enthaltenen Information verändert wird, dass der Wert der von dem Modell gebildeten Größe an den tatsächlichen Wert dieser Größe angenähert wird.

2. Verfahren nach Anspruch 1, **dadurch gekennzeichnet, dass** das Modell für diese Größe wie folgt lautet:

$$\Delta NS_{stoc} = Q_{nox} \cdot Effstoc \cdot \Delta t \cdot \alpha$$

wobei:

- $\Delta NS_{stoc}$ die im Auspufftopf während eines Zeitintervalls $\Delta t$ für ein mageres Gemisch abgelagerte Masse an Stickoxiden (NOx) ist,
- $Q_{nox}$ die Menge an Stickoxiden (NOx) des Motors ist,
- $\alpha$ der Korrekturfaktor ist, der vergrößert oder verkleinert wird, je nach dem, ob das Ausgangssignal der Sonde kippt oder nicht kippt, auf einen einem fetten Gemisch entsprechenden Wert während der Reinigung des Topfes über einen vorgegebenen Zeitraum (T).

3. Verfahren nach Anspruch 2, **dadurch gekennzeichnet, dass** der Wert des Wirkungsgrades der Ablagerung (Effstoc) einer Tabelle entnommen wird, deren Eingangswerte die Temperatur ($\theta$) und der Füllgrad (NS/NSC) des Auspufftopfes mit Stickoxiden (NOx) ist, wobei (NS) die Masse an im Auspufftopf abgelagerten Stickoxiden ist und (NSC) die Masse an ablagerbaren Stickoxiden ist, als Funktion der Temperatur ($\theta$) des Auspufftopfes.

4. Verfahren nach Anspruch 1, **dadurch gekennzeichnet, dass** das Modell für die Größe wie folgt lautet:

$$\tau' = \frac{NS}{NSC} \cdot \beta$$

wobei

- $\tau'$ der Füllgrad des Auspufftopfes mit Stickoxiden (NOx) ist,
- NS und NSC die Masse an im Auspufftopf abgelagerten Stickoxiden bzw. die Masse an im Auspufftopf ablagerbaren Stickoxiden ist,
- $\beta$ der Korrekturfaktor ist, der vergrößert oder verkleinert wird, je nach dem ob das Ausgangssignal der Sonde (6) kippt oder nicht kippt, auf einen Wert entsprechend einem fetten Gemisch während einer Reinigung des Auspufftopfes über einen vorgegebenen Zeitraum (T).

5. Verfahren nach Anspruch 2 oder 4, **dadurch gekennzeichnet, dass** der Wert des Wirkungsgrades der Ablagerung (Effstoc) einer Tabelle entnommen wird, deren Eingangswerte die Temperatur und ein korrigierter Füllgrad ($\frac{NS}{NSC} \cdot \beta$) des Auspufftopfes ist.

6. Verfahren nach Anspruch 5 in Kombination mit Anspruch 2, **dadurch gekennzeichnet, dass** der korrigierte Füllgrad des Auspufftopfes den Wert ($\frac{NS}{NSC} \cdot \beta$) aufweist,
wobei

- NS und NSC die im Auspufftopf abgelagerten Stickoxide bzw. die Masse der im Auspufftopf ablagerbaren Stickoxide sind,
- $\beta$ ein Korrekturfaktor ist, der vergrößert oder verkleinert wird, je nach dem, ob das Ausgangssignal der Sonde kippt oder nicht kippt, auf einen Wert entsprechend einem fetten Gemisch während einer Reinigung des Topfes über einen vorgegebenen Zeitraum ($\Delta t$).

7. Verfahren nach einem der vorhergehenden Ansprüche, **dadurch gekennzeichnet, dass** während einer Reinigung des Auspufftopfes kontinuierlich eine Abschätzung der im Auspufftopf verbliebenen Masse an Stickoxiden erfolgt, und dass die Reinigung beendet wird, wenn diese Masse den Wert 0 erreicht.

FIG.:1

FIG.:2

FIG.:3